# EUROPEAN PATENT APPLICATION

(11) **EP 4 704 322 A1**
(43) Date of publication of application: **04.03.2026**
(21) Application number: 23934836.0
(22) Date of filing: 25.08.2023
(51) Int. Cl.: H02M 7/5387

(54) **POWER CONVERTER AND STARTING METHOD THEREFOR**

(30) Priority: 28.04.2023 CN 202310488350
(71) Applicant: Sungrow Power Supply Co., Ltd., Hefei, Anhui 230088 (CN)
(72) Inventor: YANG, Zongjun, Hefei, Anhui 230088 (CN); LI, Yan, Hefei, Anhui 230088 (CN); LI, Xiaoxun, Hefei, Anhui 230088 (CN)
(74) Representative: Biallo, Dario
(86) International application number: PCT/CN2023/114958
(87) International publication number: WO 2024/221666

(57) **Abstract**

The present application provides a power converter and a starting method therefor. The starting method comprises after a starting instruction is received, at each moment, enabling at least one target input-side conversion circuit to be in a power-limited state or a zero-power state, wherein when the target input-side conversion circuit is in the power-limited state or the zero-power state, the input voltage of the target input-side conversion circuit is not lowered. Therefore, the input voltage of at least one target input-side conversion circuit is not lowered at each moment, that is, decoupling of power supply of a controller and power conversion of the power converter is realized, so that the starting method can avoid the problem of undervoltage shutdown of the controller, and can further avoid the starting hiccup phenomenon of the power converter. Additionally, because the power converter can be a photovoltaic inverter, the starting method can also avoid the starting hiccup phenomenon of the photovoltaic inverter.

## Description

This application claims the priority to Chinese Patent Application No. 2023104883506, titled "POWER CONVERTER AND STARTING METHOD THEREFOR", filed on April 28, 2023 with the China National Intellectual Property Administration, which is incorporated herein by reference in its entirety.

### FIELD

The present disclosure relates to the technical field of photovoltaic power generation, and in particular to a power converter and a method for starting the power converter.

### BACKGROUND

At present, a direct-current side of a photovoltaic inverter is typically connected to multiple photovoltaic strings, and the photovoltaic inverter is capable of controlling a power of each of the photovoltaic strings to achieve accurate power tracking.

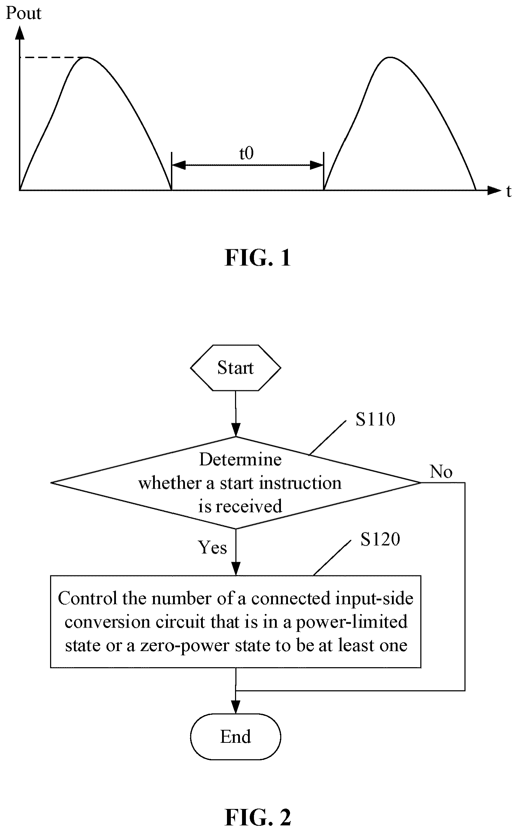

Under low-light conditions, such as mornings or evenings, the input powers of the photovoltaic strings are low, and output voltages of the photovoltaic strings are pulled down by the photovoltaic inverter at a moment when the photovoltaic inverter is started and connected to the power grid. Since a controller in the photovoltaic inverter is powered by the photovoltaic strings or a direct-current bus in the photovoltaic inverter, the voltage reduction probably triggers shutdown of the controller due to undervoltage, subsequently leading to shutdown of the photovoltaic inverter. Following the shutdown of the photovoltaic inverter, the output voltages of the photovoltaic strings are restored back to normal, and the photovoltaic inverter is restarted and re-connected to the power grid. Such phenomenon is repeated and referred to as a startup hiccup. An output power of the photovoltaic inverter is represented as Pout, as shown in FIG. 1.

It takes some time to perform various tests each time the photovoltaic inverter is restarted. At a result, repeated hiccups substantially reduce the effective power generation and the service life of the photovoltaic inverter.

Therefore, how to prevent the startup hiccup of the photovoltaic inverter is a technical problem to be solved urgently.

### SUMMARY

In view of this, a power converter and a method for starting the power converter are provided according to the present disclosure, to prevent the startup hiccup of the photovoltaic inverter.

To achieve the above objective, the following technical solutions are provided according to embodiments of the present disclosure.

In a first aspect, a method for starting a power converter is provided according the present disclosure. The method is applied to a controller in the power converter. A power supply end of the controller is connected to an input side of at least one input-side conversion circuit in the power converter. The method includes:
determining whether a start instruction is received; and
controlling, on receiving the start instruction, the number of a connected input-side conversion circuit that is in a power-limited state or a zero-power state among one or more connected input-side conversion circuits to be at least one. The one or more connected input-side conversion circuits are the at least one input-side conversion circuit.

In an embodiment, controlling the number of the connected input-side conversion circuit that is in the power-limited state to be at least one includes: controlling at least one of the one or more connected input-side conversion circuits to perform power-limited power conversion; and controlling the number of the connected input-side conversion circuit that is in the zero-power state to be at least one includes: controlling at least one of the one or more connected input-side conversion circuits to stop power conversion.

In an embodiment, controlling the number of the connected input-side conversion circuit that is in the power-limited state to be at least one includes: controlling at least two of the one or more connected input-side conversion circuits to alternately perform power-limited power conversion; and controlling the number of the connected input-side conversion circuit that is in the zero-power state to be at least one includes: controlling at least two of the one or more connected input-side conversion circuits to alternately stop the power conversion.

In an embodiment, the at least two connected input-side conversion circuits, which alternately perform the power-limited power conversion, alternate between performing the power-limited power conversion and performing a first preset power conversion; and the at least two connected input-side conversion circuits, which alternately stop the power conversion, alternate between performing the first preset power conversion and stopping the power conversion.

In an embodiment, the first preset power conversion refers to power conversion at a current maximum power.

In an embodiment, before, after or during controlling the number of the connected input-side conversion circuit that is in the power-limited state or the zero-power state to be at least one, the method further includes: keeping at least one remaining input-side conversion circuit, other than the connected input-side conversion circuit in the power-limited state or the zero-power state, in a power conversion state.

In an embodiment, keeping the at least one remaining input-side conversion circuit in the power conversion state includes: controlling the at least one remaining input-side conversion circuit to perform a second preset power conversion.

In an embodiment, the second preset power conversion refers to power conversion at a current maximum power.

In an embodiment, before controlling the number of the connected input-side conversion circuit that is in the power-limited state or the zero-power state to be at least one, the method further includes: determining whether an input-side electrical parameter of each of the one or more connected input-side conversion circuits is less than a predetermined value. The number of the connected input-side conversion circuit that is in the power-limited state or the zero-power state is controlled to be at least one, in a case that the input-side electrical parameter of each of the one or more connected input-side conversion circuits is less than the predetermined value.

In an embodiment, all the input-side conversion circuits are controlled to perform a third preset power conversion in a case that not all of input-side electrical parameters of the one or more connected input-side conversion circuits are less than the predetermined value.

In an embodiment, the third preset power conversion refers to power conversion at a current maximum power.

In an embodiment, the connected input-side conversion circuits in the power-limited state or the zero-power state includes a connected input-side conversion circuit with a minimum input voltage among the one or more connected input-side conversion circuits.

In a second aspect, a power converter is provided according to the present disclosure. The power converter includes a controller, an auxiliary power supply and at least two input-side conversion circuits. An input side of each of the at least two input-side conversion circuits is connected to at least one photovoltaic string. Output sides of the at least two input-side conversion circuits are cascaded at an output side of the power converter, or the output sides of the at least two input-side conversion circuits are connected in parallel at an output side of the power converter. A power supply end of the controller is connected to an input side of at least one of the at least two input-side conversion circuits through the auxiliary power supply. The at least two input-side conversion circuits are controlled by the controller and the controller is configured to perform the method for starting a power converter according to any embodiment of the first aspect.

In an embodiment, the power converter further includes an output-side conversion circuit. The output sides of the at least two input-side conversion circuits are cascaded at an input side of the output-side conversion circuit, or the output sides of the at least two input-side conversion circuits are connected in parallel at an output side of the output-side conversion circuit. An output side of the output-side conversion circuit is connected to the output side of the power converter. The output-side conversion circuit is controlled by the controller.

In an embodiment, the at least two input-side conversion circuits are DC/DC conversion circuits, and the output-side conversion circuit is a DC/AC conversion circuit; or the at least two input-side conversion circuits are DC/AC conversion circuits, and the output-side conversion circuit is an AC/AC conversion circuit.

In an embodiment, each of the DC/DC conversion circuits is implemented by a Boost topology, a Buck topology, a Buck-Boost topology, a flyback conversion topology, or a DAB direct-current conversion topology.

In an embodiment, the at least two input-side conversion circuits are DC/AC conversion circuits.

In an embodiment, each of the DC/AC conversion circuits is implemented by an H-bridge inverter topology or a DAB inverter topology.

In an embodiment, the number of the one or more connected input-side conversion circuits is greater than 1, and the one or more connected input-side conversion circuits are the at least one input-side conversion circuit. Input-side negative electrodes of the one or more connected input-side conversion circuits are connected to each other, an input-side positive electrode of each of the one or more connected input-side conversion circuits is connected to an anode of a first diode, and a cathode of the first diode is connected to a positive electrode of the auxiliary power supply.

In an embodiment, the number of the one or more connected input-side conversion circuits is greater than 1, and the one or more connected input-side conversion circuits are the at least one input-side conversion circuit. Input-side negative electrodes of the one or more connected input-side conversion circuits are not connected to each other, an input-side positive electrode of each of the one or more connected input-side conversion circuits is connected to an anode of a second diode, a cathode of the second diode is connected to a positive electrode of the auxiliary power supply, the input-side negative electrode of the connected input-side conversion circuit is connected to a cathode of a third diode, and an anode of the third diode is connected to a negative electrode of the auxiliary power supply.

According to the above technical solution, a method for starting a power converter is provided according to the present disclosure. The method is applied to a controller in the power converter. A power supply end of the controller is connected to an input side of at least one input-side conversion circuit in the power converter. With the method, on receipt of a start instruction, the number of a connected input-side conversion circuit that is in a power-limited state or a zero-power state is controlled to be at least one. An input voltage of the connected input-side conversion circuit is not pulled down when the connected input-side conversion circuit is in the power-limited state or the zero-power state. Thus, there is always at least one connected input-side conversion circuit of which the input voltage is not pulled down, so that power supply of the controller is decoupled from power conversion of the power converter, preventing the shutdown of the controller due to undervoltage, thus preventing the startup hiccups of the power converter. In addition, since the power converter may be a photovoltaic inverter, the method can also prevent startup hiccups of the photovoltaic inverter.

### BRIEF DESCRIPTION OF THE DRAWINGS

To more clearly describe the technical solutions in the embodiments of the present disclosure or the conventional technology, drawings to be used in the description of the embodiments or the conventional technology are briefly described hereinafter. It is apparent that the drawings described hereinafter are merely used for illustrating the embodiments of the present disclosure, and those skilled in the art can obtain other drawings according to the drawings without any creative effort.
FIG. 1 is a schematic diagram of an output power of a photovoltaic inverter when experiencing a startup hiccup in the conventional technology;
FIG. 2 to FIG. 10 are flowcharts of a method for starting a power converter in nine implementations according to an embodiment of the present disclosure;
FIG. 11 is a schematic diagram of an operation mode of input-side conversion circuits according to the present disclosure;
FIG. 12 is a schematic diagram of an output power of a power converter in the operation mode shown in FIG. 11;
FIG. 13 is a schematic diagram of another output power of the power converter in the operation mode shown in FIG. 11;
FIG. 14 to FIG. 17 are schematic structural diagrams of a power converter in four implementations according to an embodiment of the present disclosure;
FIG. 18 is a schematic structural diagram of a DAB inverter topology;
FIG. 19 is a schematic structural diagram of a Boost topology; and
FIG. 20 is a schematic structural diagram of a flyback conversion topology.

### DETAILED DESCRIPTION

Technical solutions according to the embodiments of the present disclosure are described clearly and completely as follows in conjunction with the drawings in the embodiments of the present disclosure. It is obvious that the described embodiments are only a part of the embodiments according to the present disclosure, rather than all of the embodiments. All other embodiments obtained by those skilled in the art based on the embodiments of the present disclosure without any creative effort fall within the protection scope of the present disclosure.

In the present disclosure, the relationship terms such as "first" and "second" are only used to distinguish one entity or operation from another entity or operation, rather than to necessitate or imply that an actual relationship or order exists between the entities or operations. Moreover, the terms "comprises", "includes", or any other variation are intended to cover a non-exclusive inclusion such that a process, method, article, or apparatus comprising a set of elements includes not only those elements but also other elements not expressly listed, and may also include elements inherent to such a process, method, article, or apparatus. Unless expressively limited otherwise, a process, method, article or apparatus limited by "comprising/including a(n)..." does not exclude existence of another identical element in such process, method, article or apparatus.

In order to prevent startup hiccups of a photovoltaic inverter, a method for starting a power converter is provided according to an embodiment of the present disclosure. The detailed procedure of the method is shown in FIG. 2. The method is applied to a controller in the power converter, and a power supply end of the controller is connected to an input side of at least one input-side conversion circuit in the power converter.

The method includes the following steps S110 to S120.

In step S110, it is determined whether a start instruction is received.

Step S120 is performed in a case that the start instruction is received. The method is stopped in a case that no start instruction is received.

The start instruction is a signal for informing the controller whether to start the power converter.

In step S120, the number of a connected input-side conversion circuit in a power-limited state or a zero-power state among one or more connected input-side conversion circuits is controlled to be at least one.

In step S120, the connected input-side conversion circuit is the input-side conversion circuit of which the input side is connected to the power supply end of the controller.

In step S120, the power-limited state is a state in which the input-side conversion circuit performs power conversion and has an output power less than a predetermined power. The predetermined power is a maximum power at which an input voltage of the input-side conversion circuit is pulled down during the power conversion. That is, for an input-side conversion circuit operating in the power-limited state, the input voltage of the input-side conversion circuit is not pulled down by the input-side conversion circuit during the power conversion. Generally, the predetermined power is set based on the actual situation of the power converter.

In step S120, the zero-power state is a state in which the input-side conversion circuit stops power conversion.

In an embodiment, the connected input-side conversion circuit in the power-limited state or the zero-power state is a connected input-side conversion circuit with a minimum input voltage among the one or more connected input-side conversion circuits. In practice, the implementation of the connected input-side conversion circuit in the power-limited state or the zero-power state depends on the practical situations, which is not limited herein. All the implementations fall within the protection scope of the present disclosure. In addition, the connected input-side conversion circuit in the power-limited state or the zero-power state is the connected input-side conversion circuit with the minimum input voltage among the one or more connected input-side conversion circuits, input-side conversion circuits other than the connected input-side conversion circuit in the power-limited state or the zero-power state have a maximum total available power, and thus this implementation is a preferred implementation.

As described above, the input voltage of the connected input-side conversion circuit is not pulled down when the connected input-side conversion circuit is in the power-limited state or the zero-power state. Thus, with the method, there is always at least one connected input-side conversion circuit of which the input voltage is not pulled down, so that power supply of the controller is decoupled from power conversion of the power converter, preventing the shutdown of the controller due to undervoltage, thus preventing the startup hiccups of the power converter. In addition, since the power converter may be a photovoltaic inverter, the method can also prevent startup hiccups of the photovoltaic inverter, thus improving the power supply stability for the controller in the photovoltaic inverter, that is, reducing the number of hiccups, thereby enhancing the efficiency of power generation of the photovoltaic inverter.

It should be noted that in the conventional technology, due to frequent hiccups, the number of use times of mechanical parts in the photovoltaic inverter is increased, shortening the service life of the mechanical parts. According to the present disclosure, the service life of the photovoltaic inverter is prolonged because the number of hiccups is reduced.

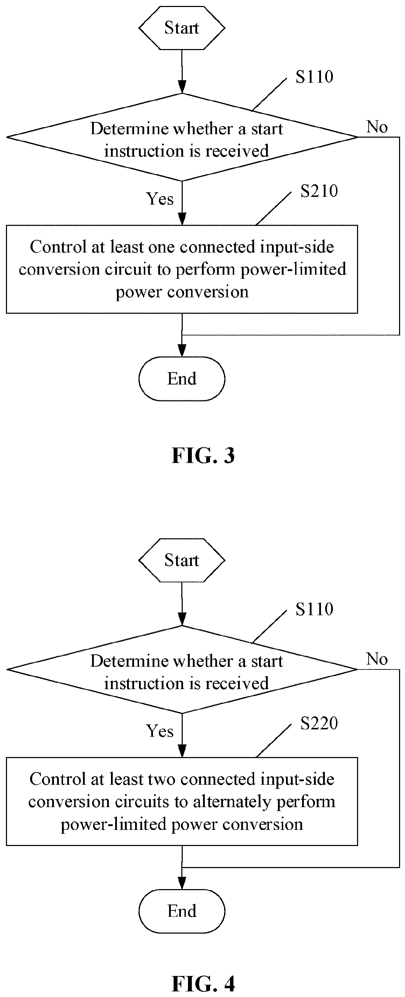

In another embodiment of the present disclosure, a detailed implementation in which the number of the connected input-side conversion circuit in the power-limited state is controlled to be at least one is provided. FIG. 3 shows the detailed procedure. The implementation includes the following step S210.

In step S210, at least one connected input-side conversion circuit is controlled to perform power-limited power conversion.

In step S210, the power-limited power conversion refers to power conversion in which an output power is less than a predetermined power. The predetermined power is described in detail in the above embodiments and is not repeated herein.

In the embodiment, another detailed implementation in which the number of the connected input-side conversion circuit in the power-limited state is controlled to be at least one is provided. FIG. 4 shows the detailed procedure. The implementation includes the following step S220.

In step S220, at least two connected input-side conversion circuits are controlled to alternately perform power-limited power conversion.

For example, assuming that three connected input-side conversion circuits alternately perform power-limited power conversion. First, a first connected input-side conversion circuit is controlled to perform power-limited power conversion. Subsequently, a second connected input-side conversion circuit replaces the first connected input-side conversion circuit to continue the power-limited power conversion. Finally, a third connected input-side conversion circuit replaces the second connected input-side conversion circuit controlled to continue the power-limited power conversion. The above process is cyclically performed, that is, in the next cycle, the first connected input-side conversion circuit replaces the third connected input-side conversion circuit to continue the power-limited power conversion, and so on.

It should be noted that the process of controlling the connected input-side conversion circuit to perform power-limited power conversion is described above and is not repeated herein.

In step S220, at least two connected input-side conversion circuits alternately perform power-limited power conversion, which is equivalent to these connected input-side conversion circuits performing power-limited power conversion at intervals. Specifically, the connected input-side conversion circuits, which perform power-limited power conversion at intervals, alternate between performing the power-limited power conversion and a first preset power conversion.

In an embodiment, the first preset power conversion refers to power conversion at a current maximum power. In practice, the first preset power conversion is not limited thereto. All the implementations fall within the protection scope of the present disclosure. The first preset power conversion refers to the power conversion at the current maximum power, maximizing an output power of the power converter, and therefore such implementation is a preferred implementation.

The above embodiments describe two implementations in which the number of the connected input-side conversion circuit that is in the power-limited state is controlled to be at least one. In practice, the implementations are not limited thereto. All the implementations fall within the protection scope of the present disclosure.

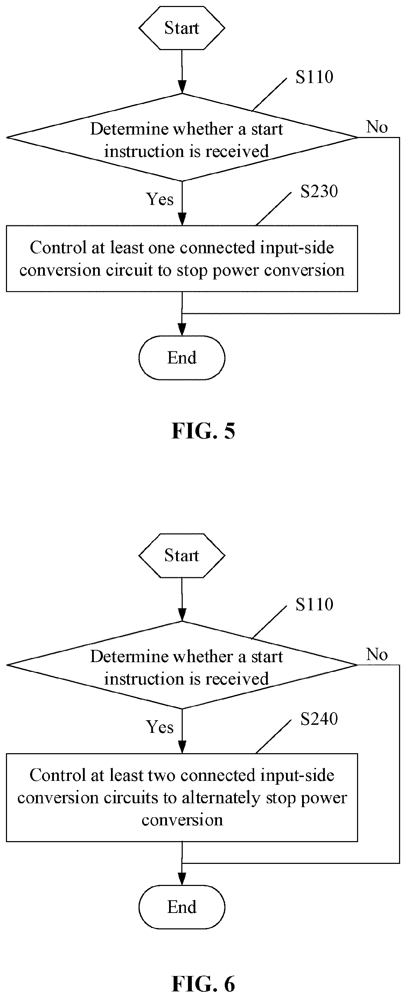

In the embodiment, a detailed implementation of the number of the connected input-side conversion circuit that is in the zero-power state is controlled to be at least one is provided. FIG. 5 shows the detailed procedure. The implementation includes the following step S230.

In step S230, at least one connected input-side conversion circuit is controlled to stop power conversion.

In the embodiment, another detailed implementation in which the number of the connected input-side conversion circuit that is in the zero-power state is controlled to be at least one is provided. FIG. 6 shows the detailed procedure. The implementation includes the following step S240.

In step S240, at least two connected input-side conversion circuits are controlled to alternately stop power conversion.

For example, assuming that three connected input-side conversion circuits are controlled to alternately stop power conversion. First, a first connected input-side conversion circuit is controlled to stop power conversion. Subsequently, a second connected input-side conversion circuit replaces the first connected input-side conversion circuit to stop the power conversion. Finally, a third connected input-side conversion circuit replaces the second connected input-side conversion circuit to stop the power conversion. The above process is cyclically performed, that is, in the next cycle, the first connected input-side conversion circuit replaces the third connected input-side conversion circuit to stop the power conversion, and so on.

In step S240, at least two connected input-side conversion circuit alternately stop power conversion, which is equivalent to these connected input-side conversion circuits stopping power conversion at intervals. Specifically, the connected input-side conversion circuits, which stop power conversion at intervals, alternate between performing a first preset power conversion and stopping the power conversion.

It should be noted that the first preset power conversion is described in detail above and is not repeated herein.

The above embodiments describe two implementations in which the number of the connected input-side conversion circuit that is in the zero-power state is controlled to be at least one. In practice, implementations are not limited thereto. All the implementations fall within the protection scope of the present disclosure.

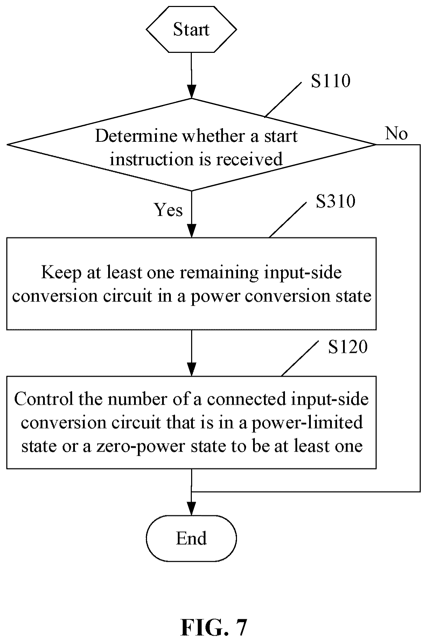

According to another embodiment of the present disclosure, another implementation of the method for starting a power converter is provided. FIG. 7 shows the detailed procedure of the implementation (FIG. 7 shows an example in which step S310 is performed before step S120 on basis of FIG. 2). Before, after, or during performing the step S120 on basis of the implementations of the method described in the above embodiments, the method further includes the following step S310.

In step S310, at least one remaining input-side conversion circuit is kept in a power conversion state.

In step S310, the remaining input-side conversion circuit refer to the input-side conversion circuit other than the connected input-side conversion circuit in the power-limited state or the zero-power state described in step S120.

In step S310, the power conversion state is a state in which the input-side conversion circuit performs power conversion. That is, the input-side power conversion circuit is in the power conversion state, which indicates that the input-side power conversion circuit performs power conversion.

The above embodiment is only an implementation for the remaining input-side conversion circuit. In practice, the implementation is not limited thereto. For example, all of the remaining input-side conversion circuits are controlled to operate in the zero-power state, which are not limited herein, depending on the practical situations. All the implementations fall within the protection scope of the present disclosure. Further, since the power converter is mainly for power conversion, the former implementation is a preferred implementation.

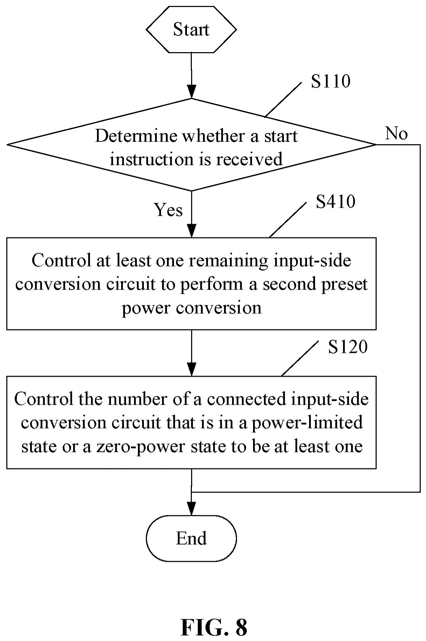

According to another embodiment of the present disclosure, a detailed implementation of step S310 is provided. FIG. 8 shows the detailed procedure. The implementation includes the following step S410.

In step S410, at least one remaining input-side conversion circuit is controlled to perform a second preset power conversion.

In an embodiment, the second preset power conversion refers to power conversion at a current maximum power. In practice, the second preset power conversion is not limited thereto. All the implementations fall within the protection scope of the present disclosure. The second preset power conversion refers to the power conversion at the current maximum power, maximizing the output power of the power converter, and therefore such implementation is a preferred implementation.

The above embodiment describes only an implementation of step S310. In practice, the implementations are not limited thereto, depending on the practical situations. All the implementations fall within the protection scope of the present disclosure.

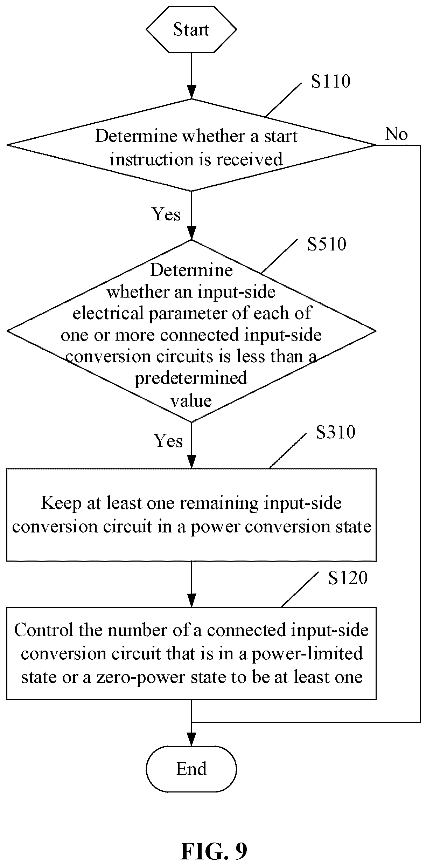

According to another embodiment of the present disclosure, another implementation of the method for starting a power converter is provided. FIG. 9 shows the detailed procedure of the implementation (FIG. 9 shows the implementation on basis of FIG. 7). On basis of the above implementation, the method further includes the following step S510 before the step S120.

In step S510, it is determined whether an input-side electrical parameter of each of the one or more connected input-side conversion circuits is less than a predetermined value.

Step S120 is performed in a case that the input-side electrical parameter of each of the one or more connected input-side conversion circuits is less than the predetermined value.

In an embodiment, the input-side electrical parameter may be an input-side current, an input voltage, or an input-side power, which is not limited herein, depending on the practical situations. All the implementations fall within the protection scope of the present disclosure.

The predetermined value is a minimum value of the input-side electrical parameter of the input-side conversion circuit when a photovoltaic string connected to the input-side conversion circuit is in a high-light environment. That is, in a case that the input-side electrical parameter of the input-side conversion circuit is less than the predetermined value, it indicates that the photovoltaic string connected to the input-side conversion circuit is in a weak-light environment. In a case that the input-side electrical parameter of the input-side conversion circuit is greater than or equal to the predetermined value, it indicates that the photovoltaic string connected to the input-side conversion circuit is in a strong-light environment. The principle for the connected input-side conversion circuit is the same as those above and is not repeated herein. Under normal circumstances, the predetermined value is set based on the actual situation.

It should be noted that in a case that not all of the input-side electrical parameters of the one or more connected input-side conversion circuits are less than the predetermined value, the power converter are controlled in multiple manners, which are described in detail in the following embodiments and are not repeated herein.

It should be noted that in a case that the step S510 and step S310 are both performed, step S510 is performed before step S310, as shown in FIG. 9; and in a case that the input-side electrical parameters of all of the one or more connected input-side conversion circuits are less than the predetermined values, step S310 is performed before step S120.

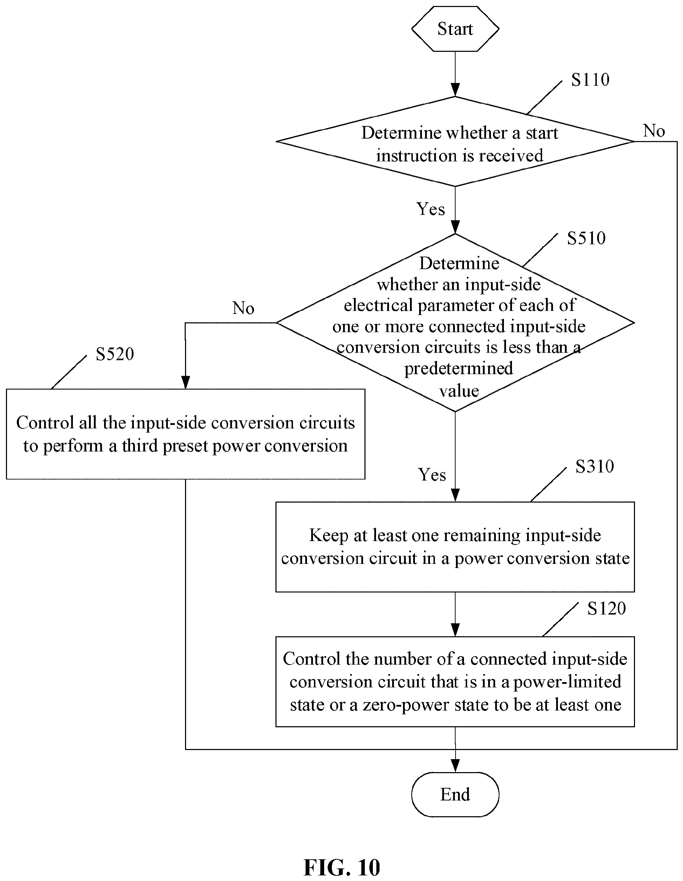

According to another embodiment of the present disclosure, another implementation of the method for starting a power converter is provided. FIG. 10 shows the detailed procedure of the implementation (FIG. 10 shows an implementation on basis of FIG. 9). After it is determined that not all of the input-side electrical parameters of the one or more connected input-side conversion circuits are less than the predetermined value, the method further includes the following step S520.

In step S520, all the input-side conversion circuits are controlled to perform a third preset power conversion.

In an embodiment, the third preset power conversion refers to power conversion at a current maximum power. In practice, the third preset power conversion is not limited thereto. All the implementations fall within the protection scope of the present disclosure. The third preset power conversion refers to the power conversion at the current maximum power, maximizing the output power of the power converter, and therefore such implementation is a preferred implementation.

The following description about an operation mode of each input-side conversion circuit in the power converter is provided by taking an example that the first preset power conversion, the second preset power conversion and the third preset power conversion refer to the power conversions at respective current maximum powers.

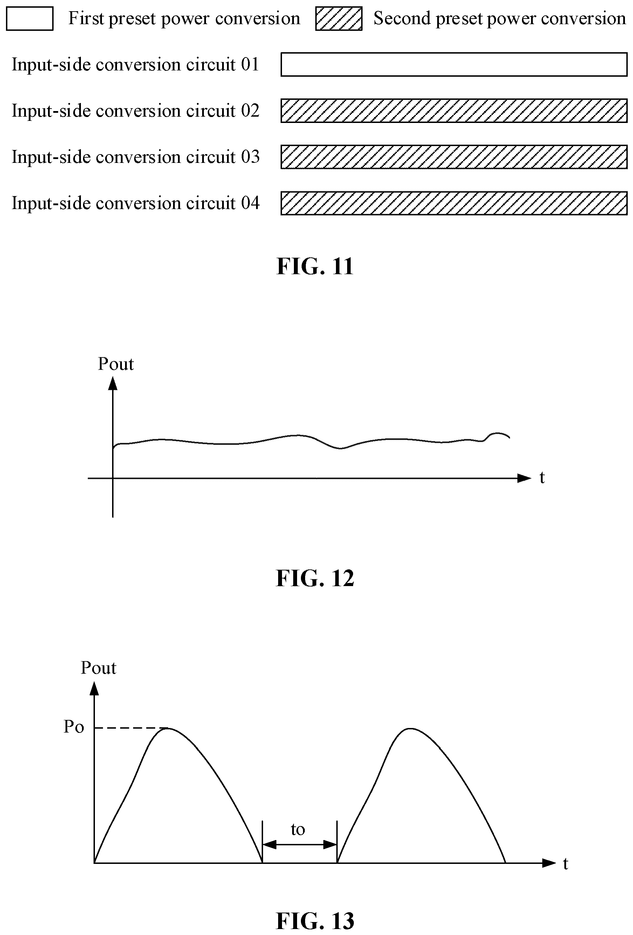

In the example, the power converter includes four input-side power conversion circuits, all of which are connected input-side conversion circuits. FIG. 11 shows the operation modes of the input-side conversion circuits. In FIG. 11, an input-side conversion circuit 01 performs power-limited power conversion, and input-side conversion circuits 02 to 04 perform the first preset power conversion. Further, the first preset power conversion refers to power conversion at a current maximum power.

In a case that input powers of the input-side conversion circuits 02 to 04 are not low, an output power Pout of the power converter may be stabilized at a low value, as shown in FIG. 12.

In a case that the input powers of the input-side conversion circuits 02 to 04 are low, the output power Pout of the power converter is shown in FIG. 13. After the first preset power conversion has just been started, an input voltage of the input-side conversion circuit is pulled down to a voltage beyond a range of a supply voltage at which the controller is able to operate normally. As a result, the output power Pout of the input-side conversion circuit is increased from zero to a power and then decreased to zero. After the input voltage of the input-side conversion circuit is restored, the input-side conversion circuit performs the first preset power conversion again. That is, the output power Pout is increased from zero to the power and then decreased to zero, and so on. Thus, the output power is formed as an intermittent curve similar to hiccups. In comparison with the conventional technology, the controller does not shut down due to undervoltage, and thus a hiccup time t0 is shortened, thereby extending an effective power generation duration.

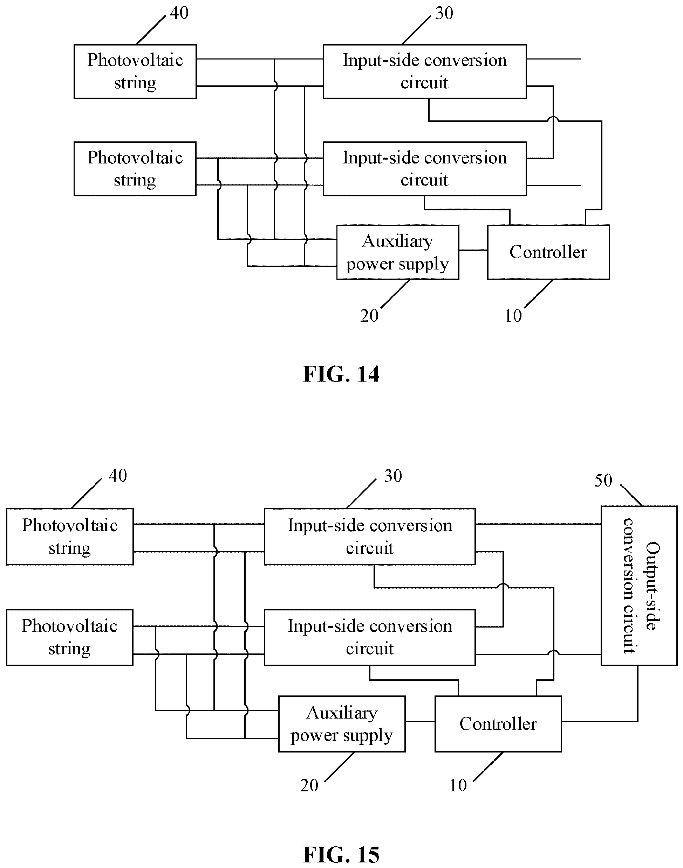

In another aspect, a power converter is provided according to the present disclosure. FIG. 14 shows a detailed structure of the power converter (FIG. 14 shows an example that the power converter includes two input-side conversion circuits 30 and output sides of the two input-side conversion circuits 30 are cascaded). In an embodiment, the power converter includes a controller 10, an auxiliary power supply 20 and at least two input-side conversion circuits 30. The connections between various components are described as follows.

An input side of the input-side conversion circuit 30 is connected to at least one photovoltaic string 40. Output sides of the at least two input-side conversion circuits 30 are cascaded at an output side of the power converter, or the output sides of the at least two input-side conversion circuits 30 are connected in parallel at an output side of the power converter. A power supply end of the controller 10 is connected to an input side of at least one of the input-side conversion circuits 30 through the auxiliary power supply 20. The input-side conversion circuits 30 are controlled by the controller 10. The controller 10 is configured to perform the method for starting a power converter in the above-described embodiments.

In an embodiment, the input-side conversion circuits 30 are DC/AC conversion circuits. In practice, the input-side conversion circuits 30 are not limited thereto, depending on the practical situations. All the implementations fall within the protection scope of the present disclosure.

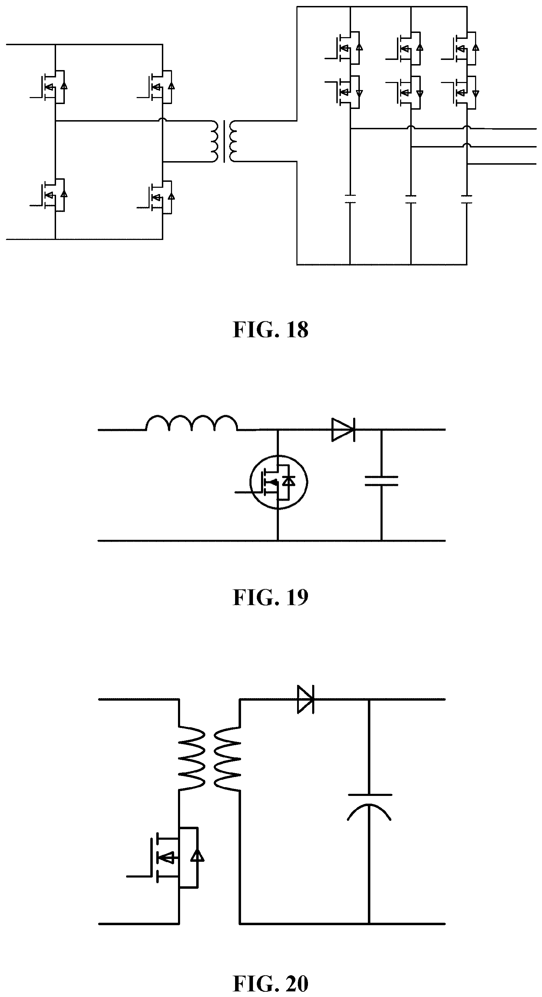

In an embodiment, the DC/AC conversion circuit is implemented by an H-bridge inverter topology or a DAB inverter topology, as shown in FIG. 18. In practice, the implementation of the DC/AC conversion circuit is not limited thereto, depending on the practical situations. All the implementations fall within the protection scope of the present disclosure.

According to another embodiment of the present disclosure, another implementation of the power converter is provided. FIG. 15 shows a detailed structure of the power converter. On basis of the above embodiments, the power converter further includes: an output-side conversion circuit 50. The connections between the output-side conversion circuit 50 and other components are described as follows.

The output sides of the input-side conversion circuits 30 are cascaded at an input side of the output-side conversion circuit 50, or the output sides of the input-side conversion circuits 30 are connected in parallel at an input side of the output-side conversion circuit 50. An output side of the output-side conversion circuit 50 is connected to the output side of the power converter. The output-side conversion circuit 50 is controlled by the controller 10.

In an embodiment, the input-side conversion circuits 30 are DC/DC conversion circuits, and the output-side conversion circuit 50 is a DC/AC conversion circuit. In another embodiment, the input-side conversion circuits 30 are DC/AC conversion circuits, and the output-side conversion circuit 50 is an AC/AC conversion circuit.

The above two examples describes two combinations of the input-side conversion circuits and the output-side conversion circuit. In practice, the combinations are not limited thereto, depending on the practical situations. All the implementations fall within the protection scope of the present disclosure.

In an embodiment, the DC/AC conversion circuit is implemented by the H-bridge inverter topology or the DAB inverter topology, as shown in FIG. 18. In practice, the implementation of the DC/AC conversion circuit is not limited thereto, depending on the practical situations. All the implementations fall within the protection scope of the present disclosure.

In an embodiment, the DC/DC conversion circuit is implemented by a Boost topology (as shown in FIG. 19), a Buck topology, a Buck-Boost topology, a flyback conversion topology (as shown in FIG. 19), or a Dual Active Bridge (DAB) direct-current conversion topology. In practice, the implementation of the DC/DC conversion circuit is not limited thereto, depending on the practical situations. All the implementations fall within the protection scope of the present disclosure.

According to another embodiment of the present disclosure, another implementation of the power converter is provided. The implementation is applicable to a case where the number of the connected input-side conversion circuits 30 is greater than 1, and input-side negative electrodes of all the connected input-side conversion circuits 30 are connected to each other. The connected input-side conversion circuits 30 are input-side conversion circuits 30 of which input sides are connected to the power supply end of the controller 10.

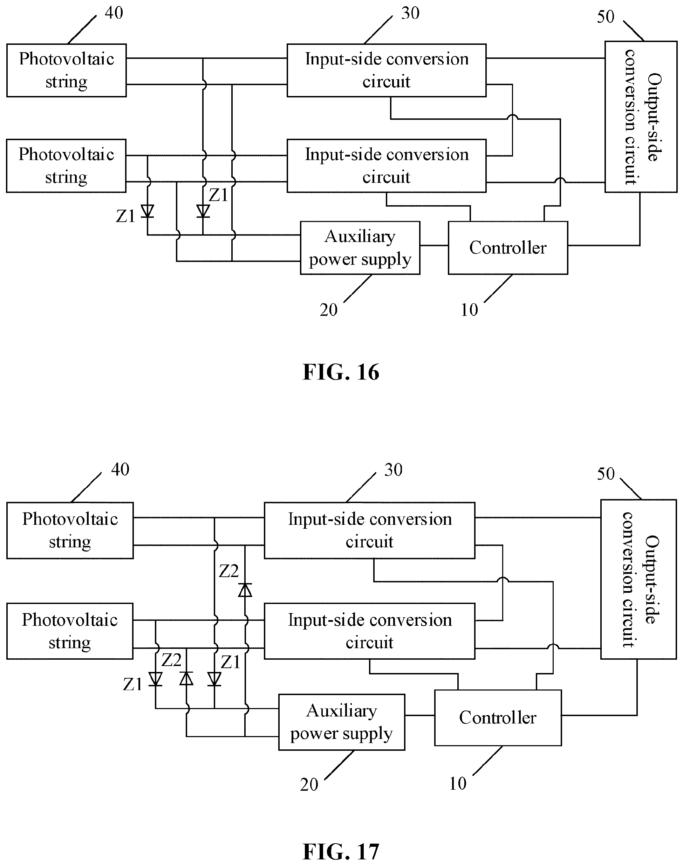

FIG. 16 shows a structure of the power converter in this implementation (FIG. 16 shows the structure on basis of FIG. 15). This implementation is different from the above implementation in that, in this implementation, an input-side positive electrode of each of the connected input-side conversion circuits 30 is connected to an anode of a first diode, and a cathode of the first diode is connected to a positive electrode of the auxiliary power supply 20.

In the implementation, a diode is arranged between the input-side positive electrode of the connected input-side conversion circuit 30 and the positive electrode of the auxiliary power supply 20, thus avoiding damage to the connected input-side conversion circuit 30 and the auxiliary power supply 20 due to current backflow.

According to the embodiment of the present disclosure, another implementation of the power converter is provided. This implementation is applicable to a case where the number of the connected input-side conversion circuits 30 is greater than 1, and the input-side negative electrodes of all the connected input-side conversion circuits 30 are not connected to each other. The connected input-side conversion circuits 30 are input-side conversion circuits 30 of which input sides are connected to the power supply end of the controller 10.

FIG. 17 shows a structure of the power converter in this implementation (FIG. 17 shows the structure on basis of FIG. 15). This implementation is different from the above implementation in that, in this implementation, an input-side positive electrode of each of the connected input-side conversion circuits 30 is connected to an anode of a second diode, an cathode of the second diode is connected to a positive electrode of the auxiliary power supply 20, an input-side negative electrode of the connected input-side conversion circuit 30 is connected to a cathode of a third diode, and an anode of the third diode is connected to a negative electrode of the auxiliary power supply 20.

In the implementation, a diode is arranged between the input-side positive electrode of the connected input-side conversion circuit 30 and the positive electrode of the auxiliary power supply 20, and another diode is arranged between the input-side negative electrode of the connected input-side conversion circuit 30 and the negative electrode of the auxiliary power supply 20, thus avoiding damage to the connected input-side conversion circuits 30 and the auxiliary power supply 20 due to current backflow.

Two implementations of the power converter are provided according to the embodiment, which are not limited herein, depending on the practical situations. All the implementations fall within the protection scope of the present disclosure.

According to the description of the above embodiments, features recorded in the embodiments in this specification may be replaced or combined with each other and those skilled in the art may implement or use the present disclosure. Merely preferred embodiments of the present disclosure are described above and the present disclosure is not limited thereto. Although the present disclosure is disclosed as above with preferred embodiments, which are not intended to limit the present disclosure. For those skilled in the art, many variations, modifications or equivalent replacements may be made to the technical solutions of the present disclosure by using the methods and technical contents disclosed above, without departing from the scope of the technical solutions of the present disclosure. Therefore, any simple changes, equivalent variations and modifications made to the above embodiments according to the technical essence of the present disclosure without departing the content of the technical solutions of the present disclosure fall within the protection scope of the technical solutions of the present disclosure.

## Claims

1. A method for starting a power converter, applied to a controller in the power converter, wherein a power supply end of the controller is connected to an input side of at least one input-side conversion circuit in the power converter, and the method comprises:
determining whether a start instruction is received; and
controlling, on receiving the start instruction, the number of a connected input-side conversion circuit that is in a power-limited state or a zero-power state among one or more connected input-side conversion circuits to be at least one, wherein the one or more connected input-side conversion circuits are the at least one input-side conversion circuit.

2. The method for starting a power converter according to claim 1, wherein controlling the number of the connected input-side conversion circuit that is in the power-limited state to be at least one comprises:
controlling at least one of the one or more connected input-side conversion circuits to perform power-limited power conversion; and
wherein controlling the number of the connected input-side conversion circuit that is in the zero-power state to be at least one comprises:
controlling at least one of the one or more connected input-side conversion circuits to stop power conversion.

3. The method for starting a power converter according to claim 1, wherein controlling the number of the connected input-side conversion circuit that is in the power-limited state to be at least one comprises:
controlling at least two of the one or more connected input-side conversion circuits to alternately perform power-limited power conversion; and
wherein controlling the number of the connected input-side conversion circuit that is in the zero-power state to be at least one comprises:
controlling at least two of the one or more connected input-side conversion circuits to alternately stop the power conversion.

4. The method for starting a power converter according to claim 3, wherein
the at least two connected input-side conversion circuits, which alternately perform the power-limited power conversion, alternate between performing the power-limited power conversion and performing a first preset power conversion; and
the at least two connected input-side conversion circuits, which alternately stop the power conversion, alternate between performing the first preset power conversion and stopping the power conversion.

5. The method for starting a power converter according to claim 4, wherein the first preset power conversion refers to power conversion at a current maximum power.

6. The method for starting a power converter according to any one of claims 1 to 5, wherein before, after or during controlling the number of the connected input-side conversion circuit that is in the power-limited state or the zero-power state to be at least one, the method further comprises:
keeping at least one remaining input-side conversion circuit, other than the connected input-side conversion circuit in the power-limited state or the zero-power state, in a power conversion state.

7. The method for starting a power converter according to claim 6, wherein keeping the at least one remaining input-side conversion circuit in the power conversion state comprises:
controlling the at least one remaining input-side conversion circuit to perform a second preset power conversion.

8. The method for starting a power converter according to claim 7, wherein the second preset power conversion refers to power conversion at a current maximum power.

9. The method for starting a power converter according to any one of claims 1 to 5, wherein before controlling the number of the connected input-side conversion circuit that is in the power-limited state or the zero-power state to be at least one, the method further comprises:
determining whether an input-side electrical parameter of each of the one or more connected input-side conversion circuits is less than a predetermined value, wherein
the number of the connected input-side conversion circuit that is in the power-limited state or the zero-power state is controlled to be at least one, in a case that the input-side electrical parameter of each of the one or more connected input-side conversion circuits is less than the predetermined value.

10. The method for starting a power converter according to claim 9, wherein all the input-side conversion circuits are controlled to perform a third preset power conversion in a case that not all of input-side electrical parameters of the one or more connected input-side conversion circuits are less than the predetermined value.

11. The method for starting a power converter according to claim 10, wherein the third preset power conversion refers to power conversion at a current maximum power.

12. The method for starting a power converter according to any one of claims 1 to 5, wherein the connected input-side conversion circuit in the power-limited state or the zero-power state comprises a connected input-side conversion circuit with a minimum input voltage among the one or more connected input-side conversion circuits.

13. A power converter comprising: a controller, an auxiliary power supply and at least two input-side conversion circuits, wherein
an input side of each of the at least two input-side conversion circuits is connected to at least one photovoltaic string;
output sides of the at least two input-side conversion circuits are cascaded at an output side of the power converter, or output sides of the at least two input-side conversion circuits are connected in parallel at an output side of the power converter;
a power supply end of the controller is connected to an input side of at least one of the at least two input-side conversion circuits through the auxiliary power supply; and
the at least two input-side conversion circuits are controlled by the controller and the controller is configured to perform the method for starting a power converter according to any one of claims 1 to 12.

14. The power converter according to claim 13, further comprising an output-side conversion circuit, wherein
the output sides of the at least two input-side conversion circuits are cascaded at an input side of the output-side conversion circuit, or the output sides of the at least two input-side conversion circuits are connected in parallel at an input side of the output-side conversion circuit;
an output side of the output-side conversion circuit is connected to the output side of the power converter; and
the output-side conversion circuit is controlled by the controller.

15. The power converter according to claim 14, wherein
the at least two input-side conversion circuits are DC/DC conversion circuits, and the output-side conversion circuit is a DC/AC conversion circuit; or
the at least two input-side conversion circuits are DC/AC conversion circuits, and the output-side conversion circuit is an AC/AC conversion circuit.

16. The power converter according to claim 15, wherein each of the DC/DC conversion circuits is implemented by a Boost topology, a Buck topology, a Buck-Boost topology, a flyback conversion topology, or a DAB direct-current conversion topology.

17. The power converter according to claim 13, wherein the at least two input-side conversion circuits are DC/AC conversion circuits.

18. The power converter according to claim 15 or 17, wherein each of the DC/AC conversion circuits is implemented by an H-bridge inverter topology or a DAB inverter topology.

19. The power converter according to any one of claims 13 to 17, wherein the number of the one or more connected input-side conversion circuits is greater than 1, and the one or more connected input-side conversion circuits are the at least one input-side conversion circuit; and
input-side negative electrodes of the one or more connected input-side conversion circuits are connected to each other, an input-side positive electrode of each of the one or more connected input-side conversion circuits is connected to an anode of a first diode, and a cathode of the first diode is connected to a positive electrode of the auxiliary power supply.

20. The power converter according to any one of claims 13 to 17, wherein the number of the one or more connected input-side conversion circuits is greater than 1, and the one or more connected input-side conversion circuits are the at least one input-side conversion circuit; and
input-side negative electrodes of the one or more connected input-side conversion circuits are not connected to each other, an input-side positive electrode of each of the one or more connected input-side conversion circuits is connected to an anode of a second diode, a anode of the second diode is connected to a positive electrode of the auxiliary power supply, the input-side negative electrode of the connected input-side conversion circuit is connected to a cathode of a third diode, and an cathode of the third diode is connected to a negative electrode of the auxiliary power supply.
